Europäisches Patentamt

European Patent Office

Office européen des brevets

(11) Numéro de publication: **0 156 658**
**A1**

## (12) DEMANDE DE BREVET EUROPEEN

(21) Numéro de dépôt: **85400158.3**

(22) Date de dépôt: **31.01.85**

(51) Int. Cl.⁴: **B 23 D 47/12**
**B 27 C 9/04, B 23 Q 5/04**
**F 16 H 7/08, B 27 B 5/24**

(30) Priorité: **03.02.84 FR 8401715**

(43) Date de publication de la demande:
**02.10.85 Bulletin 85/40**

(84) Etats contractants désignés:
**AT BE CH DE GB IT LI NL SE**

(71) Demandeur: **LUREM S.A. Société dite**
**La Haute Chapelle**
**F-61700 Domfront(FR)**

(72) Inventeur: **Grenier, Jacques**
**7 Impasse des Comtes d'Artois**
**F-61700 Domfront(FR)**

(74) Mandataire: **Polus, Camille et al,**
**c/o Cabinet Lavoix 2, Place d'Estienne d'Orves**
**F-75441 Paris Cedex 09(FR)**

(54) **Dispositif d'entrainement à courroie et machine à bois en comportant application.**

(57) Ce dispositif comporte une courroie (27) sans fin coopérant avec une première poulie (26) entrainée sélectivement par un moteur (5) et d'axe (Y-Y) fixe par rapport au bâti, et avec une deuxième poulie (28) d'axe (V-V) portée par un support (30) orientable articulé autour d'un axe (I) orthogonal aux axes (Y-Y) des première et deuxième poulies (26, 28), les brins de la courroie (27) étant semi-croisés et passant sur des galets (32) de renvoi d'axe (J) parallèle à l'axe (I) du support (30), ces axes étant décalés afin que la courroie (27) reste tendue quel que soit la position angulaire du support (30).

Ce dispositif s'applique à une machine à bois comportant une scie inclinable (2), cette dernière étant portée par le support (30) articulé.

FIG.2

Croydon Printing Company Ltd.

L'invention concerne les dispositifs d'entraînement à courroies, en particulier pour machine à bois comportant une scie orientable ou inclinable, combinée éventuellement avec d'autres organes tels qu'une toupie et/ou une raboteuse-dégauchisseuse-mortaiseuse.

Dans les machines à bois à scie inclinable connues, on est généralement obligé de déplacer le moteur entraînant la scie en même temps que cette dernière pour incliner celle-ci par rapport à la table de coupe. On a donc un ensemble oscillant coûteux et lourd à utiliser.

Si en outre la machine comporte d'autres organes tels qu'une toupie ou une raboteuse, il faut prévoir un moteur supplémentaire pour les entraîner.

Le but principal de l'invention est de proposer une machine à bois à scie inclinable telle que la scie puisse être inclinée sans déplacement du moteur qui l'entraîne, et de permettre du même coup l'utilisation de ce même moteur pour entraîner d'éventuels autres organes rotatifs.

Ce but est atteint selon l'invention grâce à un dispositif d'entraînement à poulies et courroies sans fin pour un outil porté par un support orientable par rapport à un bâti fixe autour d'un axe, comprenant une première poulie montée rotative autour d'un axe à peu près fixe par rapport au bâti, une deuxième poulie portée par le support orientable et montée rotative autour d'un axe, une courroie passant sur ces deux poulies et deux galets ou poulies de renvoi au moins à peu près coaxiaux et dont l'axe commun est parallèle à l'axe d'articulation du support orientable, chaque brin de la courroie passant sur l'un des galets respectivement, caractérisé en ce que l'axe autour duquel le support est orientable par rapport au bâti, est à peu

2

près perpendiculaire à l'axe de rotation de l'outil.

Suivant d'autres caractéristiques :

- les axes des première et deuxième poulies sont situés dans un même plan à peu près perpendiculaire à l'axe d'articulation du support inclinable et à l'axe des galets de renvoi et sont situés chacun à peu près à égale distance de ces deux galets.

- l'axe des galets de renvoi est plus proche de l'axe de la deuxième poulie que l'axe d'articulation du support, la position relative de ces axes étant déterminée pour que la tension de la courroie demeure à peu près constante sur toute la plage de déplacement du support.

L'invention a également pour objet une machine combinée, notamment une machine à bois, équipée d'un tel dispositif.

L'invention va être décrite plus en détail ci-dessous, en se référant aux dessins annexés, donnés à titre d'exemple et sur lesquels :

- la Fig.1 est une vue schématique en coupe longitudinale d'une machine à bois comprenant un dispositif d'entraînement selon l'invention ;

- la Fig.2 est une vue en élévation avec arrachement de la machine de la Fig.1, suivant la flèche F de la Fig.1 ;

- la Fig.3 est une vue partielle de dessus avec arrachement de la machine de la Fig.1 ;

- la Fig.4 représente schématiquement un détail du dispositif de la Fig.1 ;

- la Fig.5 est une vue d'un détail de la machine en coupe partielle à plus grande échelle ;

- la Fig.6 est une vue en coupe partielle de certains éléments du dispositif de la Fig.1 ;

- la Fig.7 est une vue en élévation du tableau de bord de la machine de la Fig.1.

3

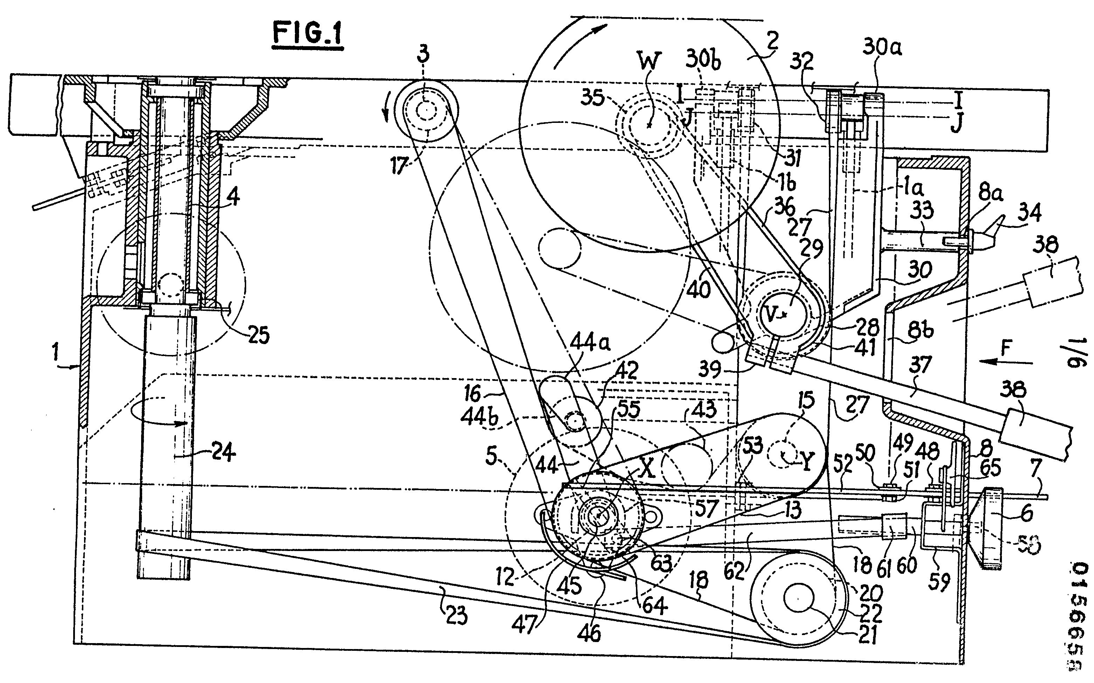

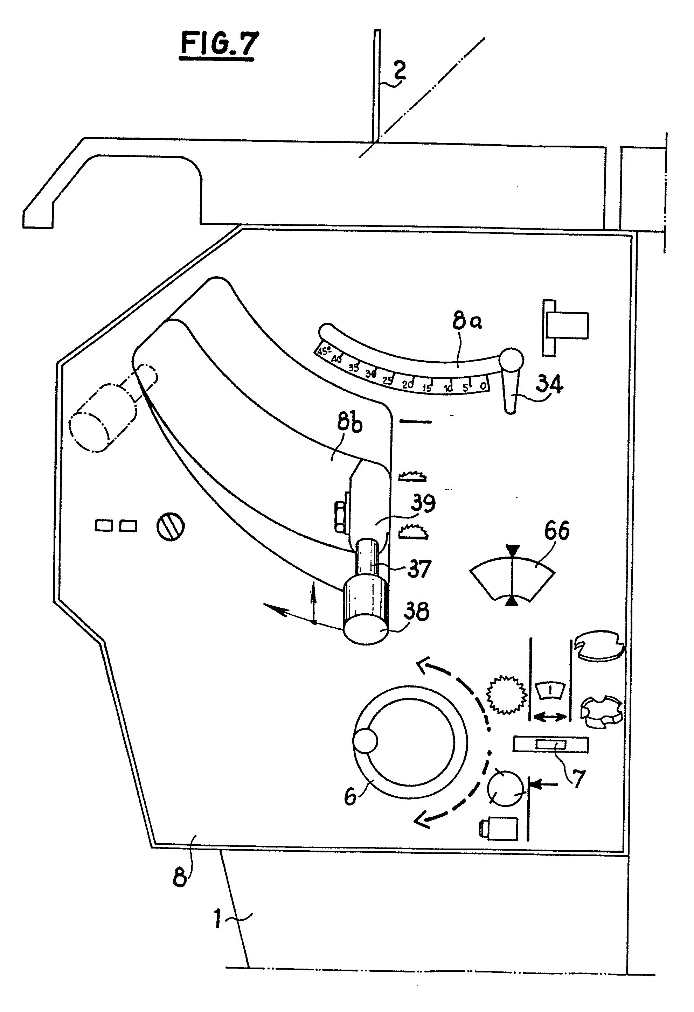

Sur la Fig.1, on a représenté un bâti 1 d'une machine à bois équipée notamment d'une scie circulaire inclinable 2, d'une raboteuse-dégauchisseuse-mortaiseuse portée par un arbre transversal 3, et d'une toupie portée par un arbre vertical 4. Ces trois organes sont entraînés à partir d'un moteur unique 5, la sélection de l'organe entraîné étant effectuée grâce à une manivelle 6 et un levier 7 en saillie sur un tableau de bord frontal 8 (Fig.1 et 7).

Le moteur 5 est placé transversalement, avec son axe à peu près parallèle à la paroi frontale 8 et fixé à peu près au milieu du bâti 1, dans une partie basse de ce dernier.

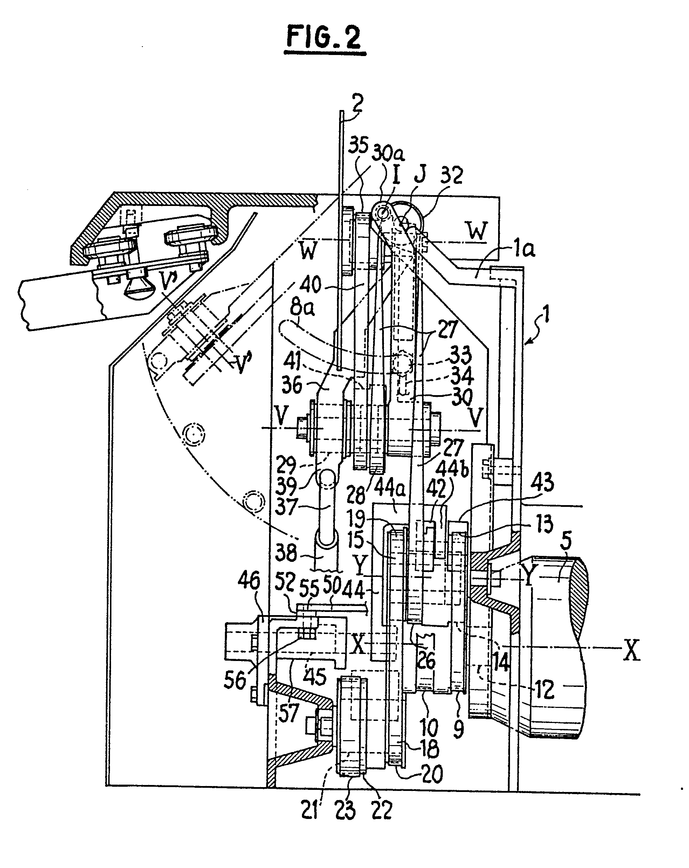

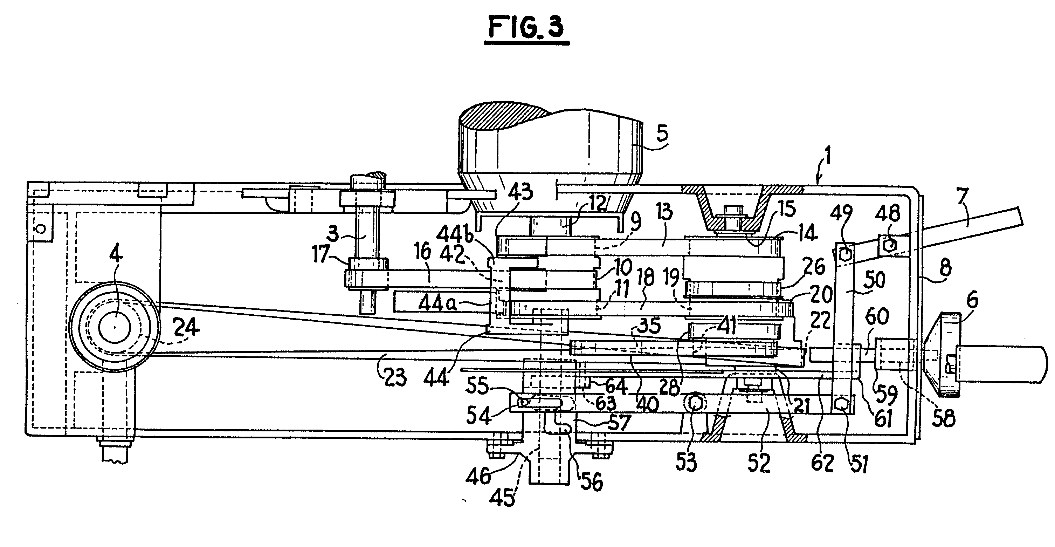

Trois poulies motrices principales 9, 10 et 11 sont montées sur l'arbre 12 du moteur d'axe X-X, et solidaires en rotation de ce dernier (Fig. 2 et 3).

Une courroie 13 relie la poulie 9 à une poulie de renvoi 14 montée folle sur un arbre 15 d'axe Y-Y parallèle à l'axe X-X de l'arbre 12 et fixé au bâti 1 entre le moteur 5 et le tableau de bord 8.

Une courroie 16 relie la poulie 10 à une poulie 17 solidaire en rotation de l'arbre 3 à une extrémité duquel elle est montée.

Une courroie 18 relie la poulie 11 à une poulie 19 montée folle sur l'arbre 15 et à une poulie 20 montée folle sur un arbre 21 parallèle à l'arbre 15 et fixé sous ce dernier au bâti 1, la courroie 18 suivant un trajet triangulaire.

La poulie 20 est solidaire en rotation d'une poulie 22 coaxiale coopérant avec une courroie 23 qui la relie à un rouleau 24 monté dans le prolongement de l'arbre de toupie 4, coaxialement et au-dessous de son palier inférieur 25. La courroie 23 suit ainsi un trajet croisé.

4

Les courroies 13, 16 et 18 ont à l'état libre une longueur et une tension telles qu'elles ne transmettent pas aux poulies 14, 17, 19 et 20 le mouvement des poulies motrices 9, 10 et 11.

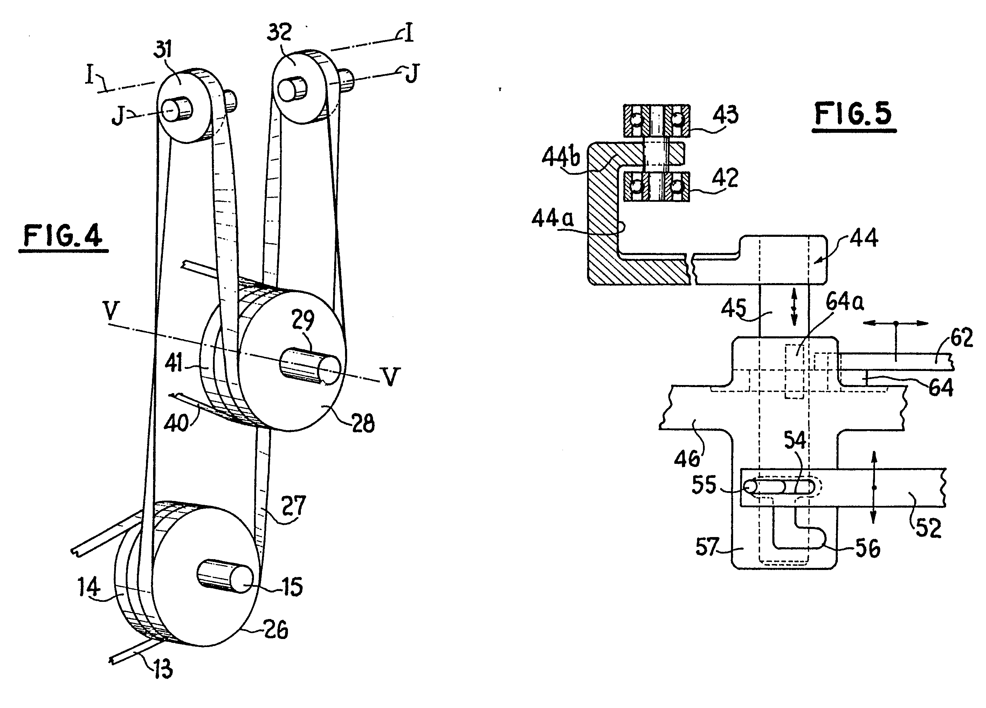

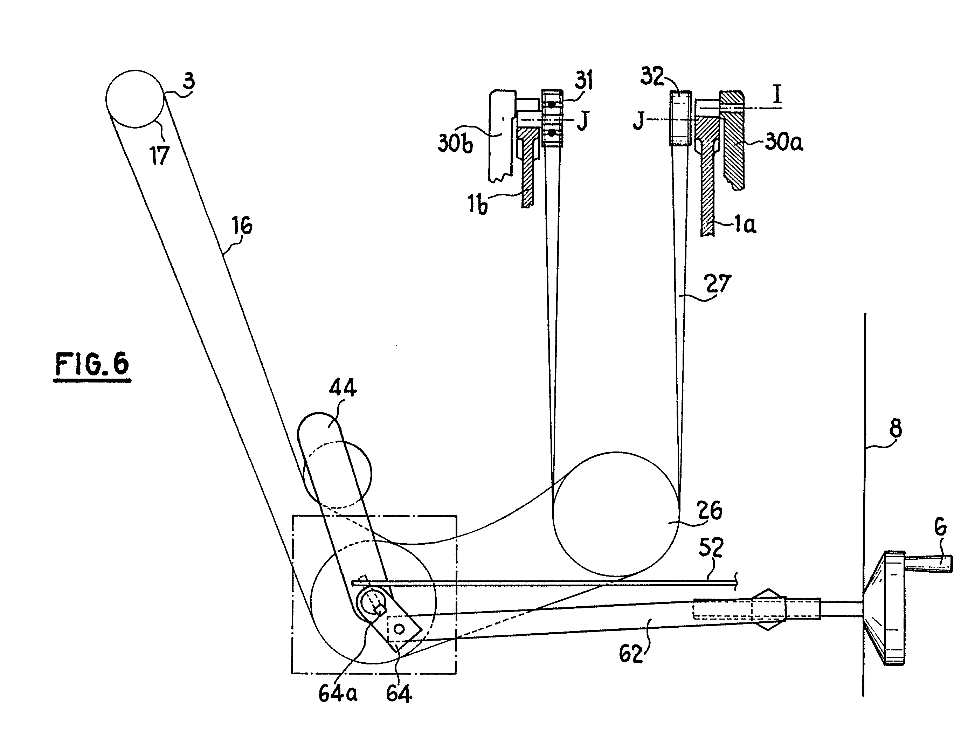

Comme on le voit sur la Fig.4, une poulie 26 montée folle sur l'arbre 15 et solidaire en rotation de la poulie de renvoi 14 coopère avec une courroie 27 formant une boucle repliée sur elle-même pour entraîner une poulie 28 montée folle sur un arbre 29 porté par un support oscillant 30 articulé sur le bâti autour d'un axe I-I orienté longitudinalement, c'est-à-dire orthogonal à l'axe X-X de l'arbre 12 du moteur. L'articulation est établie entre les extrémités de deux prolongements 30a, 30b du support 30 et les extrémités de deux potences 1a, 1b faisant saillie vers l'intérieur du bâti 1 et surplombant les arbres 15 et 21 (Fig.6). De préférence, les axes V-V de l'arbre 29 et Y-Y de l'arbre 15 sont contenus dans un même plan vertical, et parallèle entre eux lorsque la scie 2 est orientée perpendiculairement à la table de la machine (Fig.2).

La courroie 27 est repliée autour de deux galets 31 et 32 identiques, de même axe J-J parallèle à l'axe I-I, montés fous sur les potences 1a, 1b au voisinage de l'articulation du support 30.

Les deux galets 31, 32 sont espacés longitudinalement de façon à se trouver à peu près sur des plans verticaux tangents à la poulie 26 et à la poulie 28 qui sont de même diamètre.

Comme on le voit sur les Fig.2 et 6, la trace de l'axe I-I sur le plan des Figures est légèrement décalée vers le haut et vers le milieu du bâti 1 par rapport à la trace de l'axe J-J des galets. La position relative de ces deux axes est déterminée de façon à assurer une tension à peu près constante de la courroie 27, quelle que soit l'inclinaison du support 30 par rapport au bâti.

La position angulaire de ce support peut être réglée entre 0 et au moins 45° par rapport à la verticale, dans le sens des aiguilles d'une montre sur la Fig.2, au moyen d'une patte 33 en saillie sur ce support et s'étendant derrière une lumière 8a en arc de cercle représentée en traits mixtes sur la Fig.2, et en traits pleins sur la Fig.7, centrée sur l'axe I-I et ménagée sur le tableau de bord 8, arraché sur cette Figure. Une poignée de verrouillage 34 mobile dans la lumière 8a est reliée à l'extrémité saillante de cette patte 33 au moyen d'un axe fileté pour fixer le support 30 dans la position choisie par serrage des bords de la lumière.

La scie 2 et sa poulie d'entraînement 35 d'axe W-W sont portées à l'extrémité d'un bras coudé 36 monté oscillant autour de l'arbre 29 et dont la position angulaire par rapport à cet arbre peut être réglée au moyen d'un levier 37 terminé par une poignée 38. Cette dernière permet de modifier la position angulaire du bras 36 par rapport à l'arbre 29 qui le supporte pour régler la saillie ou hauteur de la lame 2 au-dessus de la table, et également de serrer ou desserrer un collier 39 de blocage de ce bras par rapport à ce même arbre 29 au moyen d'une liaison par filetage. Elle sert en outre à régler l'inclinaison de la lame 2 lorsque la poignée 34 est débloquée. A cet effet, la poignée 38 fait saillie à travers une fenêtre 8b prévue dans un renfoncement du tableau de bord et dimensionnée de façon à permettre le réglage de la saillie de la scie 2 quel que soit l'angle d'inclinaison du support 30 par rapport au bâti 1 (Fig.7).

Une courroie 40 assure la transmission entre la poulie 35 et une poulie 41, solidaire en rotation de la poulie 28 et montée sur le même arbre 29 que cette dernière.

Les courroies 23, 27 et 40 sont constamment tendues. Des mécanismes, connus en soi mais non représentés pour la clarté des figures sont prévus, de préférence, pour permettre de les retendre et faciliter la maintenance de la machine.

Le dispositif permettant de sélectionner l'entraînement de l'un des trois outils de cette machine comprend principalement deux galets tendeurs 42, 43 coaxiaux portés par un bras 44 dont une extrémité est coudée en U. Ce bras est fixe sur une tige 45 coaxiale à l'arbre moteur 12, cette tige 45 pouvant tourner et coulisser dans un manchon solidaire d'une ferrure 46 fixée au bâti 1 en face du moteur. Le bras 44 est disposé dans un plan vertical, et comporte à son extrémité une partie transversale 44a, espacée des poulies motrices 9, 10 et 11 ou au-dessus de celles-ci, et à l'extrémité de laquelle une partie 44b à peu près parallèle au bras 44 descend vers ces poulies. Les galets 42, 43 montés fous sur cette partie 44b peuvent ainsi être déplacés dans une région située au-dessus des poulies motrices, entre les courroies 13, 18 d'un côté et 16 de l'autre côté.

Une demi-coquille 47 soutient les trois courroies 13,16,18 au-dessous des poulies motrices 9,10,11 afin de garantir le débrayage.

Le levier 7, articulé en 48 sur le bâti 1 (Fig.3), est relié en 49 à une biellette 50 transversale attachée en 51 à un levier 52 longitudinal, articulé en un point intermédiaire 53 sur le bâti 1. Le levier 52 comporte à son extrémité une lumière 54 coopérant avec un ergot 55 en saillie vers le haut sur la tige 45 (Fig.5).

L'ergot 55 coopère d'autre part avec une lumière 56 en forme de "h" prévue sur une partie cylindrique 57 de la ferrure 46 et disposée comme le montre la Fig.3, entre le manchon et le levier 52.

La manivelle 6 est montée sur un axe 58 tournant dans un coussinet 59 fixé au bâti 1. L'axe 58 se prolonge par une tige filetée 60 longitudinale, coopérant avec une noix filetée ou écrou 61. Cet écrou 61 est solidaire d'une tringle 62 articulée à son extrémité avant en 63 sur un levier plat 64 en saillie vers le bas et claveté en 64a sur la tige 45 (Fig.5 et 6).

Le tableau de bord 8 de la machine, représenté en détail sur la Fig.7, comporte la lumière 8a et la fenêtre 8b dans sa partie supérieure, la manivelle 6 et le levier 7 dans sa partie inférieure. Un disque de repérage 65 placé derrière ce tableau au-dessus de la manivelle 6 qui l'entraîne en rotation par des moyens de transmission appropriés permet de visualiser la fonction commandée. Des symboles gravés sur ce disque 65 à cet effet apparaissent à travers une fenêtre de lecture 66 prévue sur le tableau 8.

Le fonctionnement de la machine est le suivant :

Pour régler l'angle d'inclinaison et la hauteur de coupe de la scie circulaire 2, on desserre la poignée 34 pour libérer le support 30 en rotation; on peut alors faire tourner ce support autour de son axe I-I au moyen de la poignée 38, en entraînant dans ce mouvement l'arbre 29 et le bras 36 portant la scie 2, pour donner à celle-ci l'inclinaison voulue, fixant l'angle de coupe comme représenté en traits

.8

mixtes sur la Fig.2 par exemple. La poignée 34 est alors resserrée.

Dans ce mouvement, la courroie 27 ne se détend pas, car la position de l'axe I-I est telle que tandis que les brins de cette courroie se déroulent autour des galets 31, 32, le centre de la poulie 28 s'éloigne de l'axe J-J de ces galets d'une distance à peu près équivalente, pour des angles compris entre 0 et 45° au moins.

Une fois l'angle de coupe déterminé, la hauteur de la lame de scie 2 peut être réglée de façon classique en desserrant le collier 39 au moyen de la poignée 38 et en déplaçant angulairement le bras 36 autour de l'arbre 29. Ce déplacement ne détend pas la courroie 40 qui tourne dans son ensemble avec ses poulies 35, 41.

Ceci étant fait, et le collier 39 resserré au moyen de la poignée 38, on met en position le dispositif de sélection pour entraîner la scie. On place d'abord au moyen de la manivelle 6 l'ergot 55 en face de la découpe transversale de la lumière 56 en h, cette position étant répérée grâce au disque 65 à travers la fenêtre de lecture 66.

En poussant alors le levier 7 vers le moteur, on place l'ergot 55 dans la branche la plus longue du h, entraînant ainsi dans la direction du moteur la tige 45, le bras 44 et donc les galets tendeurs 42, 43. Ces derniers se trouvent alors respectivement dans les plans verticaux des courroies 16 et 13.

En se référant à la Fig.1, la rotation de la manivelle 6 dans le sens anti-horaire provoque une translation de l'écrou 61 et de la tringle 62 vers la gauche, ce qui fait tourner dans le sens horaire le bras 44 par l'intermédiaire du levier 64 et amène ainsi le galet tendeur 43 contre la courroie 13 qu'il repousse jusqu'à tension de cette dernière comme représenté en traits mixtes. Le galet 42 se trouve alors dégagé de la courroie 16, dans un espace libre séparant transversalement les courroies 13 et 18.

La poulie motrice 9 entraîne alors par l'intermédiaire de la courroie 13 la poulie de renvoi 14 et successivement les poulies 26, 28, 41 et 35, cette dernière entraînant la scie 2.

Si l'on veut entraîner l'arbre 3, il suffit à partir de la position précédente de tourner la manivelle 6 dans le sens horaire, amenant le galet tendeur 42 contre la courroie 16 comme représenté en traits pleins sur la Fig.1, le galet 43 se trouvant alors dégagé de la courroie 13, dans un espace libre entre la courroie 16 et le moteur 5. Lorsque la courroie 16 est suffisamment tendue, elle entraîne directement la poulie 17 et l'arbre 3.

Pour utiliser la toupie 4, il faut amener au moyen de la manivelle 6 l'ergot 55 en face de la découpe transversale de la lumière 56 en forme de h, puis à l'aide du levier 7, cet ergot est poussé vers la branche la plus courte de cette découpe. La manivelle 6 peut alors tourner dans le sens anti-horaire pour engager cet ergot vers l'extrémité de cette branche, le galet 43 étant dégagé, entre les courroies 13 et 18, tandis que le galet tendeur 42 vient appuyer contre la courroie 18, dont la tension assure l'entraînement par la poulie 11 des poulies 19 et 20, et donc de la poulie 22 qui en est solidaire, puis de la courroie 23, du rouleau 24 et de la toupie 4.

Des micro-contacts de fin de course sont prévus pour ne permettre la marche du moteur que lorsque le dispositif de sélection est dans une position permettant d'assurer l'entraînement correct d'une fonction. La découpe 56 en h constitue par ailleurs une grille de sélection qui interdit toute fausse position des galets tendeurs 42 et 43.

Ce dispositif, permet donc de sélectionner de façon simple et fiable l'entraînement des divers organes.

De plus, la mise en tension des courroies par le galet tendeur demande peu d'effort du fait de la démultiplication à vis, et le nombre de poulies de renvoi est faible, compte tenu de la position centrale du moteur.

A titre de variante, les galets de renvoi 31, 32 pourraient être montés rotatifs sur le support inclinable 30, les positions relatives des axes I-I, J-J et V-V étant choisies en conséquence.

Selon une autre variante, l'arbre 15 pourrait être substitué par l'arbre 12 du moteur. Dans ce cas les poulies 14 et 26 seraient remplacées par des poulies motrices associées chacune à un outil, susceptibles d'être entraînées sélectivement par ledit arbre du moteur par l'intermédiaire d'un dispositif de sélection approprié.

11

REVENDICATIONS

1. Dispositif d'entraînement à poulies et courroies sans fin pour un outil porté par un support orientable (30) par rapport au bâti fixe (1) autour d'un axe (I-I), comprenant une première poulie (26) montée rotative autour d'un axe (Y-Y) à peu près fixe par rapport au bâti (1), une deuxième poulie (28) portée par le support orientable (30) et montée rotative autour d'un axe (V-V), une courroie (27) passant sur ces deux poulies (26,28) et deux galets ou poulies de renvoi (31,32) au moins à peu près coaxiaux et dont l'axe commun (J-J) est parallèle à l'axe d'articulation (I-I) du support orientable (30), chaque brin de la courroie (27) passant sur l'un des galets (31,32), respectivement, caractérisé en ce que l'axe (I-I) autour duquel le support (30) est orientable par rapport au bâti fixe (1), est à peu près perpendiculaire à l'axe de rotation de l'outil.

2. Dispositif suivant la revendication 1, caractérisé en ce que les axes (Y-Y) et (V-V) de la première et de la deuxième poulies (26, 28) sont situés dans un même plan à peu près perpendiculaire à l'axe (I-I) d'articulation du support inclinable (30) et à l'axe (J-J) des galets de renvoi (31,32) et sont situés chacun à peu près à égale distance de ces deux galets.

3. Dispositif suivant la revendication 1, caractérisé en ce que l'axe (J-J) des galets de renvoi (31,32) est plus proche de l'axe (V-V) de la deuxième poulie que l'axe (I-I) d'articulation du support (30), la position relative de ces axes étant déterminée pour que la tension de la courroie (27) demeure à peu près constante sur toute la plage de déplacement du support (30).

4. Dispositif suivant la revendication 1, caractérisé en ce que les galets de renvoi (31,32)

12  0156658

sont montés rotatifs sur le bâti (1).

5. Dispositif suivant la revendication 1, caractérisé en ce que les galets de renvoi (31,32) sont montés rotatifs sur le support orientable (30).

6. Dispositif suivant l'une quelconque des revendications 1 à 5, caractérisé en ce que l'écartement entre les galets de renvoi est à peu près égal au diamètre des poulies (26,28).

7. Machine à bois, comprenant un bâti (1) un moteur (5), une scie ou autre outil entraîné par un arbre rotatif, porté par un support orientable par rapport au bâti (1) autour d'un axe d'articulation (I-I) et un dispositif à poulies et courroies pour entraîner cet outil à partir du moteur, caractérisée en ce que le dispositif d'entraînement est tel que défini dans l'une quelconque des revendications 1 à 6, la première poulie (26) étant entraînée, comme connu en soi, à partir d'une poulie menante (11) calée sur l'arbre (12) du moteur (5).

8. Machine suivant la revendication 7, comprenant au moins deux organes menés (2,3,4) entraînés à partir du même moteur (5) au moyen de courroies (13,16,18) et de poulies menantes (9,10,11) calées sur l'arbre (12) de ce moteur (5), les courroies (13,16,-18) qui passent sur les poulies menantes (9,10,11) pour les relier à des poulies menées et/ou intermédiaires (14,17,19,20) ayant à l'état libre une longueur et une tension telles qu'elles ne réalisent pas l'entraînement des poulies menées et/ou intermédiaires, et un dispositif de commande pour amener sélectivement au moins un galet tendeur (42,43) en contact avec une courroie choisie (13,16,18) et donner à cette courroie une tension suffisante pour réaliser l'entraînement de l'outil correspondant (2,3,4), les galets tendeurs étant portés par un support (44,45,44a-44b) pouvant osciller autour d'un axe parallèle à l'axe (X-X) du moteur et éventuellement coulisser parallèlement à cet axe, caractérisée en ce que le support des galets tendeurs (42,43) comprend une tige (45) pouvant pivoter et coulisser dans un manchon d'axe voisin de l'axe (X-X) du moteur (5) et fixé au bâti (1) de la machine, un bras (44) monté perpendiculairement sur cette tige (45), ce bras ayant une extrémité (44a,44b) en U située au-dessus des poulies menantes (9,10,11) et entre des courroies (13,16,18) partant de ces poulies dans des directions différentes, les galets tendeurs (42,43) étant portés à l'-extrémité (44b) de ce bras.

9. Machine suivant la revendication 8, caractérisée en ce qu'un carter de débrayage (47) est prévu au-dessous des poulies motrices (9,10,11) pour soutenir les courroies (13,16,18) partant de ces poulies lorsqu'elles sont détendues.

10. Machine suivant l'une des revendications 8 ou 9, caractérisée en ce qu'elle comporte deux galets tendeurs (42,43) portés par le même support (44,45,44a,44b), ce support pouvant être placé dans une position telle que sa rotation dans un sens amène un premier galet tendeur (43) en contact avec une première courroie (13), le second galet tendeur (42) étant alors dégagé de toute courroie, tandis que la rotation du support dans l'autre sens amène le deuxième galet tendeur (42) en contact avec une seconde courroie (16), le premier galet tendeur (43) étant alors dégagé de toute courroie.

11. Machine suivant l'une des revendications 8 ou 9, caractérisée en ce que la tige (45) est munie d'un ergot (55) s'étendant perpendiculairement à travers une découpe (56) formant une grille de sélection des tendeurs (42,43) et prévue sur une ferrure (57) entourant partiellement la tige (45).

12. Machine suivant la revendication 11, caractérisée en ce que la découpe (56) formant une grille de sélection présente la forme générale de la lettre "h" minuscule.

13. Machine suivant la revendication 8, caractérisée en ce que les déplacements angulaires du support (44,45,44a,44b) des galets tendeurs (42,43) sont commandés par des moyens démultiplicateurs comprenant une vis sans fin (60) et un écrou (61), l'écrou étant relié par une tringlerie (62) à un levier (64) solidaire de la tige (45) du support.

14. Machine suivant la revendication 11, caractérisée en ce que le coulissement de la tige (45) du support dans son manchon est commandé par un levier (7) relié à l'ergot (55) de sélection, celui-ci s'étendant au-delà de la surface extérieure de la ferrure (57) portant la grille de sélection.

15. Machine suivant le revendication 14, caractérisée en ce que le levier (7) est relié à l'ergot (55) de sélection par l'intermédiaire d'une tringlerie (50,52) de renvoi.

16. Machine suivant la revendication 8, caractérisée en ce que les déplacements des galets tendeurs (42,43) sont indiqués sur un tableau de bord (8) par des moyens de réglage (65,66) permettant de visualiser la fonction commandée.

17. Machine suivant la revendication 13, caractérisée en ce que la rotation de la vis sans fin (60) provoque la rotation d'un disque de repérage (65) permettant de visualiser la fonction commandée à travers une fenêtre de lecture (66).

FIG.1

# FIG.2

# FIG.3

0156658

FIG.4

FIG.5

**FIG.6**

FIG.7

*6/6*

0156658

Office européen
des brevets

**RAPPORT DE RECHERCHE EUROPEENNE**

EP 85 40 0158

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 447 793 (LUREM) <br> * En entier * <br><br> --- | 1-7 | B 23 D 47/12 <br> B 27 C 9/04 <br> B 23 Q 5/04 <br> F 16 H 7/08 <br> B 27 B 5/24 |
| A | H.J. KNAB: "Übersicht über Kinematik, Mechanismen und Vorschaltgetriebe", 1928, pages 100-101, Selbstverlag, Nürnberg, DE; <br> * Page 100; figures 850-853,861 * <br><br> --- | 2,3,6 | |
| A | EP-A-0 038 747 (LUREM S.A.) <br><br> * En entier * <br><br> --- | 8,11, 12,14, 16 | |
| A | FR-A-1 037 006 (COMMERGNAT-GUILLIET) <br> * Page 1, colonne de droite, lignes 5-18; figures 1-3 * <br><br> ----- | 8,10 | **DOMAINES TECHNIQUES RECHERCHES (Int. Cl.4)** <br><br> B 23 D <br> B 27 B <br> B 27 C <br> B 23 Q <br> F 16 H |

Le présent rapport de recherche a été établi pour toutes les revendications

| Lieu de la recherche <br> LA HAYE | Date d'achèvement de la recherche <br> 21-05-1985 | Examinateur <br> MOET H.J.K. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82